# FASCICULE DE BREVET EUROPEEN

(11) **EP 0 635 169 B1**
(45) Date de publication et mention de la délivrance du brevet: **09.10.1996**
(21) Numéro de dépôt: 93908998.3
(22) Date de dépôt: 06.04.1993
(51) Int. Cl.: H02G 3/04, H02G 3/28

(54) **CONSOLE AMOVIBLE FORMANT PLINTHE DE BAS DE MUR POUR LA FIXATION DE CONNEXIONS**
ABNEHMBARE KONSOLE, WIE SOCKELLEISTE ZUR ANSCHLUSSBEFESTIGUNG
REMOVABLE PANEL FORMING A SKIRTING BOARD AT THE FOOT OF A WALL FOR THE INSTALLATION OF CONNECTIONS

(30) Priorité: 07.04.1992 FR 9204471
(43) Date de publication de la demande: 25.01.1995
(73) Titulaire: BENDRELL, Jean-Claude, F-33800 Bordeaux (FR)
(72) Inventeur: BENDRELL, Jean-Claude, F-33800 Bordeaux (FR)
(74) Mandataire: Signore, Robert
(86) Numéro de dépôt international: FR9300345
(87) Numéro de publication internationale: WO9320607

(56) Documents cités:
- AU-A- 7 215 374
- FR-A- 1 539 143
- FR-A- 2 225 858
- FR-A- 2 266 342
- FR-A- 2 555 371
- FR-A- 2 588 425

## Description

La présente invention concerne une console amovible formant plinthe de bas de mur permettant la fixation de connexions électriques et/ou de fluides et la dissimulation de câbles et canalisations liés à ces connexions.

L'intérêt de ce type de plinthes est largement reconnu car elles permettent de disposer de différentes connexions électriques et/ou de fluides en bas de mur, ces connexions étant accessibles par l'arrière. En outre, les câbles et connexions sont dissimulés de façon à réaliser un ensemble esthétiquement satisfaisant.

Ces plinthes ou consoles doivent avoir une résistance mécanique suffisante pour supporter les efforts transversaux engendrés par la mise en place et l'arrachement des connecteurs. La fixation de ces plinthes en bas de mur doit également résister à ces efforts transversaux et doit cependant permettre leur montage et démontage aisés pour accéder à l'arrière des connexions ne serait-ce que pour réaliser les branchements entre câbles et/ou canalisations aux connexions ou à l'occasion d'interventions pour réparations et maintenance. Il est en outre avantageux de mettre en place ces plinthes et réaliser les branchements en phase terminale de construction et notamment après réalisation du revêtement de sol.

La fabrication de ces plinthes ou consoles doit être obtenue en mettant en oeuvre des matériaux peu onéreux notamment des plastiques qui allient esthétique et isolation électrique.

On connaît divers types de plinthes ou de consoles réalisant quelques compromis entre certains des buts fixés ci-dessus.

Dans ce domaine, on peut citer une plinthe de bas de mur compacte (Brevet FR-A-2 225 858) dont le profilé de recouvrement est équipé de conducteurs électriques disposés dans des canaux longitudinaux. Le positionnement de ce profilé est verticalement réglable.

Un autre type de plinthe (Brevet FR-A-2 266 342) se propose de remédier à l'inconvénient fondamental de l'impossibilité du montage après pose du revêtement de sol mettant en oeuvre des moyens de retenue et de fixation réglables en hauteur.

Selon une conception différente, en faisant appel à des goulottes de section rectangulaires superposées (Brevet FR-A-2 588 425) dont les couvercles en face avant et en face supérieure permettent la fixation des socles de connexion, il est possible d'alimenter directement des appareils disposés au-dessus de ces goulottes formant plinthe.

Des perfectionnements ont été apportés aux différents types de plinthes existantes notamment en ce qui concerne leur résistance mécanique aux efforts transversaux engendrés par la mise en place ou l'arrachement d'un connecteur électrique (Brevet FR-A-2 555 371) grâce à la réalisation de boîtiers formant caissons superposables dont le couvercle en face avant est muni de fentes d'accès à des rails conducteurs.

Cependant, tous ces caissons, boîtiers, goulottes, consoles formant plinthes de bas de mur répondent à des buts précis : mise en place de la plinthe après réalisation du revêtement de sol, alimentation d'appareils électriques en partie supérieure de la plinthe, résistance mécanique aux efforts transversaux. Généralement, leur conception permet leur réalisation à partir d'étirés métalliques ou d'extrusion de matériaux plastiques de sorte que l'aspect de leur coût est pris en compte.

La nécessité d'allier l'esthétique à une utilisation aisée des connexions dans de bonnes conditions de sécurité aboutit souvent à des dispositifs compliqués dont la robustesse ne permet pas de nombreux démontages pour diverses interventions portant sur les branchements des connexions.

C'est une des raisons pour lesquelles ces plinthes doivent être de conception rustique de sorte que leur mise en place ne puisse être considérée comme définitive, leur amovibilité aoit donc être un des objectifs fondamentaux recherchés. Ces plinthes ou consoles doivent permettre de dissimuler et maintenir en position les Câbles et canalisations facilitant ainsi la restauration de locaux sans intervention sur le gros oeuvre.

L'invention a justement pour objet une console amovible formant plinthe de bas de mur pour la fixation de connexions électriques et/ou de fluides qui remédie aux inconvénients de l'art antérieur cité ci-dessus.

Selon l'invention, la console a la forme d'un Z étiré positionné verticalement, dont l'aile médiane sert de support aux connexions, et s'appuye sur trois points dans une cavité pratiquée à la partie inférieure du mur, un point de butée en partie haute de l'aile supérieure du Z, un point d'appui en partie haute de l'aile inférieure du Z, un point de fixation formant butée en partie basse de l'aile inférieure du Z.

De préférence, les ailes supérieure, médiane et inférieure constituant la forme du Z étiré àe ladite console sont de dimensions sensiblement égales.

Ces ailes peuvent être d'épaisseurs différentes et notamment l'aile inférieure d'épaisseur plus importante que les deux autres.

Selon une variante de réalisation, les ailes sont obtenues en deux ou trois éléments distincts démontables.

De préférence, les ailes sont réalisées en matériaux différents et notamment les ailes supérieure et médiane en matériaux moins rigides que l'aile inférieure.

Ainsi, à partir d'une forme particulière de la console en Z étiré positionné verticalement, selon l'utilisation de cette console,connexions électriques ou hydrauliques ou pour des raisons esthétiques, on peut faire varier les épaisseurs des ailes, la nature des matériaux les constituant, voire réaliser la console en une, deux ou trois parties.

Il peut être en effet intéressant, par exemple, de disposer d'une aile inférieure en bois et d'ailes médiane et supérieure en matériaux souples et isolants tels que plastiques ou composites. Les deux parties de la console ainsi réalisée étant fixées rigidement entre elles. De la même manière, une console en une seule partie en métal léger et d'épaisseurs différentes pour les ailes peut être réalisée à l'aile d'un profilé étiré.

Selon une réalisation préférentielle, la butée sur laquelle s'articule la partie haute de l'aile supérieure de la console est réalisée en partie haute de la cavité pratiquée à la partie inférieure du mur limitant le débattement horizontal de l'aile supérieure de ladite console.

De préférence, cette butée en partie haute de la cavité est réalisée à l'aide d'un élément rapporté fixé au mur pouvant servir de motif décoratif.

Selon une réalisation préférentielle, le point d'appui sur lequel s'articule la partie haute de l'aile inférieure du Z est réalisée en partie inférieure de la cavité servant également de point de rotation et de glissement à l'aile inférieure de ladite console lors de sa mise en place ou de son démontage.

De préférence également, la fixation en partie basse de l'aile inférieure de ladite console est réalisée en partie basse de la cavité à l'aide de moyens formant butée et facilitant les montages et démontages tels que clips invisibles sur la face avant de cette aile.

Ainsi, les points d'appui de la console amovible situés en parties haute et basse de la cavité pratiquée à la partie inférieure du mur permettent de maintenir en position fixe la console. En effet, en tirant ou en poussant sur une connexion fixée sur l'aile médiane de la corde-cette dernière reste parfaitement immobile. Ces mêmes points d'articulation permettent un démontage aisé de la console de façon à accéder à l'arrière des connexions. Il suffit, après avoir enlevé la fixation en partie basse de l'aile inférieure de la console, de faire basculer cette dernière autour du point d'appui tout en la faisant glisser autour de ce point de façon que les extrémités supérieure et inférieure de la console soient dégagées.

Selon une variante de réalisation préférentielle les points d'articulation servant de butée, appui et fixation à ladite console sont réalisés par un profilé encastré dans la cavité pratiquée à la partie inférieure du mur et pouvant servir de support au mur lui-même et aux câbles et canalisations.

Ainsi, la réalisation d'une console amovible en forme de Z étiré parfaitement immobilisée pour l'utilisation courante des différentes connexions est aisément démontable grâce à ces trois points d'appui facilitant l'accès à l'arrière des connexions.

D'autres caractéristiques et avantages ressortiront de la description qui va suivre d'un mode de réalisation de la console amovible selon l'invention donné à titre d'exemple non limitatif et en regard des dessins annexés sur lesquels :
- la figure 1 est une vue schématique en coupe de la partie inférieure d'un mur comportant la console amovible selon l'invention,
- la figure 2 est une vue schématique en coupe montrant la mise en place ou le démontage de la console dans la cavité pratiquée à la partie inférieure du mur,
- la figure 3 est une vue schématique en coupe des variantes de réalisation de la console selon l'invention et de ses points d'articulation,
- la figure 4 est une vue schématique en coupe d'une variante de réalisation des points d'articulation de la console,
- la figure 5 est une vue schématique en coupe d'une variante de réalisation du point d'articulation de l'extrémité supérieure de la console.

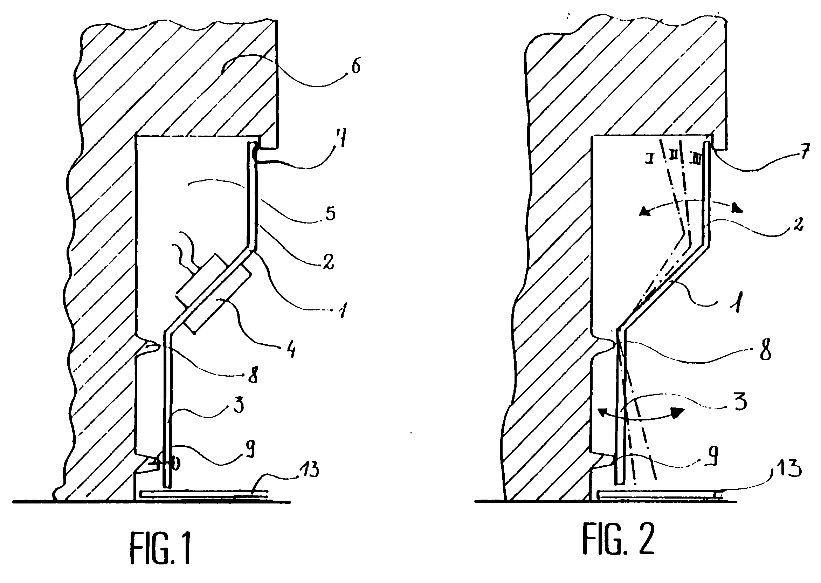

on a représenté sur la figure 1 une vue schématique en coupe de la partie inférieure d'un mur ou d'une cloison suffisamment épaisse pour que puisse s'insérer la console selon l'invention. Quelques dimensions significatives seront données à titre purement indicatif.

La console est réalisée en alliage léger de 2 mm d'épaisseur, tôle pliée pour réaliser la forme de Z étiré dont les angles obtus des ailes font environ 120°. Les ailes 1.2.3. de la console sont de dimensions 80 mm approximativement identiques. La longueur usuelle de la tôle est de 2 m découpée à la demande. La console s'insère dans une cavité pratiquée à la partie inférieure du mur d'environ 250 mm de haut et 80 mm de profondeur. L'aile médiane 1 comporte différents découpages permettant de recevoir des connexions telles que prises de courant, prises d'aspiration d'air pour aspiration centralisée, prises téléphone, télé, etc... Ces prises sont fixées sur cette aile par tous moyens conventionnels, vis Parker, clips, agrafes.

Les extrémités de la console sont immobilisées verticalement en bas par le revêtement de sol 13 et en haut par la partie supérieure horizontale de la cavité 5.

Dans le sens horizontal, la console est immobilisée en bas par tous moyens conventionnels tels que vis 9 représentée sur la figure 1 ou autres, clip, agrafe, permettant de fixer la console contre la partie verticale de la cavité 5 munie d'un bossage ou d'une entretoise, en haut par une butée 7 réalisée à l'extrémité de la partie supérieure horizontale de la cavité 5. L'aile inférieure 3 de la console étant d'une part fixée en bas 9 de la cavité, pour que l'aile supérieure 2 s'appuie en haut contre la butée 7 il est nécessaire que la console ait un troisième point d'appui 8 réalisé sur la partie verticale de la cavité 5 au niveau de la partie haute de l'aile inférieure 3. Ce point d'appui 8 constitué par un bossage ou une entretoise fixée contre la paroi verticale de la cavité 5 permet de maintenir rigidement la console en place dans la cavité et facilite les montage et démontage de cette console comme indiqué sur la figure 2 de façon à réaliser les branchements entre fils, canalisations et l'arrière des connexions fixées sur l'aile médiane 1.

Ainsi fixée, la console supporte sans difficultés, la pression exercée perpendiculairement à l'aile médiane 1 lors de la mise en place d'une prise de courant dans la connexion, ou la traction exercée lorsqu'on la retire.

La cavité 5 doit être de dimensions suffisantes pour permettre le logement de la partie arrière des connexions mais aussi le cheminement des câbles et canalisations qui peuvent être fixées en partie haute de la paroi verticale de la cavité 5.

Une vue schématique en coupe sur la figure 2 illustre la mise en place et le démontage de la console 1.2.3. dans la cavité 5. La console 1.2.3. est représentée dans trois positions. En position I, la console représentée en pointillés munie des connexions fixées sur l'aile médiane 1 (non représentées sur cette figure) est présentée obliquement dans la cavité la partie haute de l'aile inférieure 3 s'appuie sur le point d'appui 8.

Les extrémités supérieure et inférieure de la console affleurent la partie horizontale de la cavité 5 et le revêtement de sol 13.

Pour passer de la position I à la position II, il suffit de faire glisser en la remontant l'aile inférieure 3 en s'appuyant sur le point d'appui 8, les extrémités de la console affleurent encore la partie norizontale de la cavité 5 et le revêtement de sol 13.

Il suffit de continuer les mouvements de basculement et de glissement précédents sur le point d'appui 8 pour passer de la position Il à la position III. Dans cette dernière position qui est celle de la figure 1 précédente, il suffit de fixer l'aile inférieure 3 contre la paroi verticale de la cavité 5 pour que la console soit immobilisée.

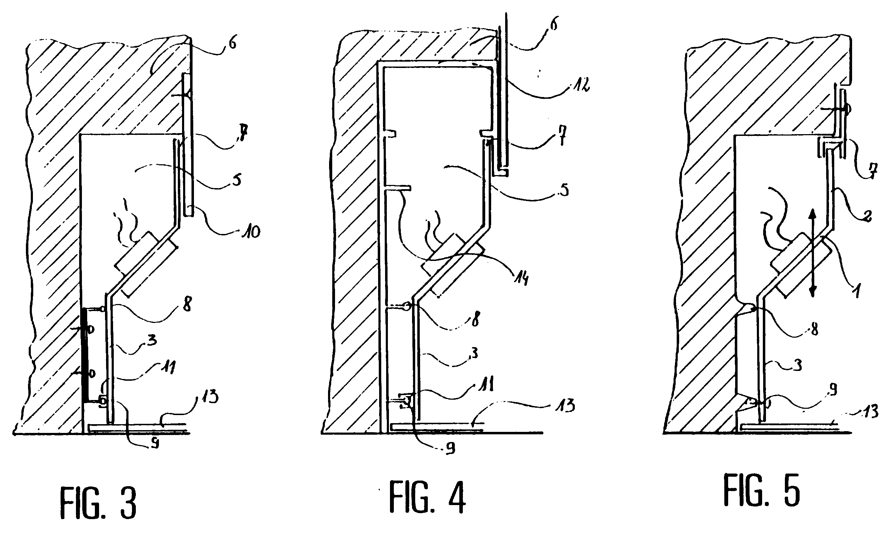

on a représenté sur la figure 3 une vue schématique en coupe de diverses variantes de réalisation de la console et des points d'appui.

Ainsi, l'aile inférieure 3 est réalisée en bois de 12 mm d'épaisseur et les ailes médiane 1 et supérieure 2 sont faites en plastique de 3 mm d'épaisseur. La fixation de ces dernières ailes 1.2. sur l'aile inférieure 3 est obtenu par simple vis à bois, une fixation par rainure et collage pourrait également convenir. De cette façon, l'aile inférieure 3 en bois peut constituer une plinthe décorative alors que les ailes médiane 1 et supérieure 2 sont en matériau isolant souple, permettant la mise en place et le démontage plus aisément que dans le cas de la figure 1.

Pour ce qui concerne les points d'appui, la butée 7 est une simple plaque en plastique opaque 10 fixée par vis au mur 6 sur lequel on a exécuté un méplat. D'autres types de fixation peuvent contenir de façon à éviter la présence de vis nuisible au plan esthétique. Le point d'appui 8 et la fixation 9 sont obtenus à l'aile d'un profilé en alliage léger fixé sur la partie verticale de la cavité 5 par vis. La fixation 9 de la console est réalisée par un clip. Ces clips sont régulièrement espacés sur l'aile inférieure 3 d'environ 400 mm. Sur la figure 4, on a représenté une vue schématique en coupe d'une variante de réalisation des points d'articulation de la console selon l'invention. Cette console du type de la figure 3 précédente pourrait tout aussi bien être celle du type de la figure 1. Un profilé en alliage léger réalise les trois points d'appui, la butée 7, le point d'appui 8, la fixation 9. Ce profilé est inséré dans la cavité 5 et fixé aux parois de cette cavité (fixations non représentées). Ce profil est structuré de façon à être parfaitement rigide et servir de support à la partie inférieure du mur mais également de support et de maintien à l'aide d'une ailette 14 aux câbles et canalisations disposés dans la partie supérieure de la cavité 5.

Ce profil encastré dans la cavité pourrait selon l'effet esthétique recherché et l'usage prévu de la console être en avancée par rapport au mur et nécessiterait, dans ce cas, une épaisseur d'encastrement plus faible, ce qui peut être intéressant si on dispose de cloisons minces.

On a représenté sur la figure 5 une vue schématique en coupe d'une variante de réalisation de la butée 7 selon l'invention. Dans les réalisations présentées sur les figures précédentes, la butée n'agissait que dans un seul sens de façon à permettre la mise en place et le démontage de la console tels qu'indiqués sur la figure 2.

Sur cette figure 5, la butée est double et constitue un encastrement réalisé de façon quelconque notamment comme présenté dans les figures 1 ou 3 ou 4. Dans cette variante, la mise en place et le démontage de la console ne peuvent plus s'opérer comme précédemment. Si les ailes médiane 1 et supérieure 2 sont suffisamment souples, il suffira de positionner l'aile supérieure dans la butée puis présenter l'aile inférieure 3 sur le point d'appui 8 et sur la fixation 9 en jouant sur la flexibilité des ailes 1 et 2. Si ces ailes 1 et 2 sont rigides, soit la réduction de la dimension de l'aile inférieure 3 permettra la mise en place, soit une adaptation de la fixation la facilitera telle par exemple la réalisation d'un trou oblong.

Ainsi, la console selon l'invention, est de maniements aisés, facile à mettre en place, facile à démonter. Elle est parfaitement fixée à la partie inférieure du mur permettant d'encaisser pression et traction lors par exemple de la mise en place d'une prise de courant et de son extraction. Rustique et esthétique, elle est en outre pratique grâce à l'accès à l'arrière des connexions.

La console selon l'invention répond bien aux buts fixés.

## Revendications

1. Console amovible formant plinthe de bas de mur pour la fixation de connexions électriques et/ou de fluides facilitant l'incorporation et la dissimulation de câbles et canalisations, caractérisée en ce que ladite console (1.2.3.) a la forme d'un Z étiré, positionné verticalement, dont l'aile médiane (1) sert de support aux connexions (4), et s'appuye sur trois points dans une cavité (5) pratiquée à la partie inférieure du mur (6), un point de butée (7) en partie haute de l'aile supérieure (2) du Z, un point d'appui (8) en partie haute de l'aile inférieure (3) du Z, un point de fixation (9) formant butée en partie basse de l'ailé inférieure (3) du Z.

2. Console amovible selon la revendication 1, caractérisée en ce que les ailes, supérieure (2), médiane (1) et inférieure (3) constituant la forme du Z étiré de ladite console (1.2.3.) sont de dimensions sensiblement égales.

3. Console amovible selon l'une quelconque des revendications 1 ou 2, caractérisée en ce que les ailes constituant la forme du Z étiré de ladite console (1.2.3.) sont d'épaisseurs différentes et notamment l'aile inférieure (3) d'épaisseur plus importante que les deux autres (1.2.).

4. Console amovible selon une des revendications 1 à 3, caractérisée en ce que les ailes constituant la forme du Z étiré de ladite console (1.2.3.) sont obtenues en deux ou trois éléments distincts démontables.

5. Console amovible selon une des revendications 1 à 4, caractérisée en ce que les ailes du Z étiré de ladite console (1.2.3.) sont réalisées en matériaux différents et notamment les ailes supérieure (2) et médiane (1) en matériaux moins rigides que l'aile inférieure (3).

6. Console amovible selon la revendication 1, caractérisée en ce que la butée (7) sur laquelle s'appuye la partie haute de l'aile supérieure (2) du Z est réalisée en partie haute de la cavité (5) pratiquée à la partie inférieure du mur (6) limitant le débattement horizontal de l'aile supérieure (2) de ladite console (1.2.3.).

7. Console amovible selon une des revendications 1 ou 6, caractérisé en ce que la butée (7) en partie haute de la cavité (5) est réalisée à l'aide d'un élément (10) rapporté fixé au mur pouvant servir de motif décoratif.

8. Console amovible selon une des revendications 1 ou 6 ou 7, caractérisée en ce que le point d'appui (8) sur lequel s'appuye la partie haute de l'aile inférieure (3) du Z est réalisé en partie inférieure de la cavité (5) servant également de point de rotation et de glissement à l'aile inférieure (3) de ladite console (1.2.3.) lors de sa mise en place ou de son démontage.

9. Console amovible selon une des revendications 1 ou 6 ou 8, caractérisée en ce que la fixation en partie basse de l'aile inférieure (3) de ladite console (1.2.3.) est réalisée en partie basse de la cavité (5) à l'aide de moyens (11) formant butée et facilitant les montages et démontages tels que clips invisibles sur la face avant de cette aile.

10. Console amovible selon une des revendications 1 ou 6 ou 9, caractérisée en ce que les points d'appui servant de butée (7), appui (8) et fixation (9) à ladite console (1.2.3.) sont réalisés par un profilé (12) encastré dans la cavité (5) pratiquée à la partie inférieure du mur (6) et pouvant servir de support au mur (6) lui-même et aux câbles et canalisations.

## Claims

1. Detachable bracket forming a wall bottom skirting for fixing electrical and/or fluid connections facilitating the incorporation and concealment of cables and ducts, characterized in that said bracket (1,2,3) is shaped like a stretched Z and positioned vertically, its median flange (1) serving as a support for the connections (4) and bearing at three points in a cavity (5) made in the lower part of the wall (6), an abutment point (7) in the upper part of the upper flange (2) of the Z, a support point (8) in the upper part of the lower flange (3) of the Z and a fixing point (9) forming an abutment in the lower part of the lower flange (3) of the Z.

2. Detachable bracket according to claim 1, characterized in that the upper (2), median (1) and lower (3) flanges forming the shape of the stretched Z of said bracket (1,2,3) have substantially equal dimensions.

3. Detachable bracket according to one of the claims 1 or 2, characterized in that the flanges constituting the shape of the stretched Z of said bracket (1,2,3) have different thicknesses and in particular the lower flange (3) is thicker than the two others (1,2).

4. Detachable bracelet according to one of the claims 1 to 3, characterized in that the flanges constituting the shape of the stretched Z of said bracket (1,2,3) are obtained from two or three separate, dismantlable elements.

5. Detachable bracelet according to one of the claims 1 to 4, characterized in that the flanges of the stretched Z of said bracket (1,2,3) are made from different materials and in particular the upper (2) and median (1) flanges are made from less rigid materials than the lower flange (3).

6. Detachable bracket according to claim 1, characterized in that the abutment (7) on which bears the upper part of the upper flange (2) of the Z is formed in the upper part of the cavity (5) made in the lower part of the wall (6) limiting the horizontal displacement of the upper flange (2) of said bracket (1,2,3).

7. Detachable bracket according to one of the claims 1 or 6, characterized in that the abutment (7) in the upper part of the cavity is produced with the aid of a joined element (10) fixed to the wall and able to serve as a decorative pattern.

8. Detachable bracelet according to one of the claims 1 or 6 or 7, characterized in that the support point (8) on which bears the upper part of the lower flange (3) of the Z is formed in the lower part of the cavity (5) also serving as a rotation and sliding point for the lower flange (3) of said bracket (1,2,3) during its assembly or disassembly.

9. Detachable bracket according to one of the claims 1 or 6 to 8, characterized in that the fixing in the lower part of the lower flange (3) of said bracket (1,2,3) is carried out in the lower part of the cavity (5) with the aid of means (11) forming an abutment and facilitating assembly and disassembly operations, such as clips which are not visible on the front face of said flange.

10. Detachable bracket according to one of the claims 1 or 6 to 9, characterized in that the bearing points serving as abutment (7), support (8) and fixing (9) points for the said bracken (1,2,3) are formed by a section (12) housed in the cavity (5) made in the lower part of the wall (6) and able to serve as a support for the wall (6), as well as for the cables and ducts.

## Patentansprüche

1. Eine abnehmbare Konsole, welche eine Sockelleiste am Fuße der Wand zur Befestigung von elektrischen Anschlüssen und/oder Anschlüssen für Fluide bildet, wobei die Aufnahme und verborgene Unterbringung von Kabeln und Leitungen ermöglicht wird, dadurch gekennzeichnet, daß die Konsole (1, 2, 3) die Form eines gestreckten Z aufweist, welches vertikal angeordnet ist, dessen mittlerer Arm (1) ein Halteelement für Anschlüsse (4) trägt, und welches sich auf drei Punkte in einer im unteren Bereich der Wand (6) ausgebildeten Ausnehmung (5) abstützt, nämlich einem Anschlagpunkt (7) im oberen Teil des oberen Arms (2) des Z, einem Auflagepunkt (8) im oberen Teil des unteren Arms (3) des Z und einem Befestigungspunkt (9), welcher einen Anschlag im unteren Teil des unteren Arms (3) des Z bildet.

2. Eine bewegliche Konsole gemäß Anspruch 1, dadurch gekennzeichnet, daß der obere Arm (2), der mittlere Arm (1) und der untere Arm (3), die die Form des gestreckten Z der Konsole (1, 2, 3) bilden, im wesentlichen gleiche Abmessungen aufweisen.

3. Eine abnehmbare Konsole gemäß Anspruch 1 oder 2, dadurch gekennzeichnet, daß die Arme, die die Form des gestreckten Z der Konsole (1, 2, 3) bilden, von unterschiedlicher Dicke sind und daß insbesondere der untere Arm (3) bedeutend dicker als die beiden anderen (1, 2) ist.

4. Eine abnehmbare Konsole gemäß einem der Ansprüche 1 bis 3, dadurch gekennzeichnet, daß die Arme, die die Form eines gestreckten Z der Konsole (1, 2, 3) bilden, als zwei oder drei verschiedene demontierbare Elemente vorliegen.

5. Eine abnehmbare Konsole gemäß einem der Ansprüche 1 bis 4, dadurch gekennzeichnet, daß die Arme des gestreckten Z der Konsole (1, 2, 3) aus unterschiedlichen Materialien ausgeführt sind und daß insbesondere der obere (2) und mittlere (1) Arm aus weniger steifen Materialien als der untere Arm (3) ausgeführt sind.

6. Eine abnehmbare Konsole gemäß Anspruch 1, dadurch gekennzeichnet, daß der Anschlag (7), auf dem sich der obere Teil des oberen Arms (2) des Z abstützt, im oberen Teil der im unteren Bereich der Wand (6) ausgebildeten Ausnehmung (5) ausgeführt ist, so daß der Anschlag (7) die horizontale Ausfederung des oberen Arms (2) der Konsole (1, 2, 3) begrenzt.

7. Eine abnehmbare Konsole gemäß Anspruch 1 oder 6, dadurch gekennzeichnet, daß der Anschlag (7) im oberen Teil der Ausnehmung (5) mit Hilfe eines an der Wand unbeweglich angebrachten Elements (10) ausgeführt ist, welches als dekoratives Muster dienen kann.

8. Eine abnehmbare Konsole gemäß einem der Ansprüche 1 oder 6 oder 7, dadurch gekennzeichnet, daß der Auflagepunkt (8), auf dem sich der obere Teil des unteren Arms (3) des Z abstützt, im unteren Teil der Ausnehmung (5) ausgeführt ist, wobei der Auflagepunkt (8) gleichermaßen als Rotationspunkt und Gleitpunkt für den unteren Arm (3) der Konsole (1, 2, 3) während ihres Einbaus oder ihrer Demontage dient.

9. Eine abnehmbare Konsole gemäß einem der Ansprüche 1 oder 6 oder 8, dadurch gekennzeichnet, daß die Befestigung im unteren Teil des unteren Arms (3) der Konsole (1, 2, 3) im unteren Teil der Ausnehmung (5) mit Hilfe von Mitteln (11) ausgeführt ist, welche einen Anschlag bilden und die Montage und Demontage etwa von unsichtbaren Klemmen auf der Seite vor diesem Arm ermöglichen.

10. Eine abnehmbare Konsole gemäß einem der Ansprüche 1 oder 6 oder 9, dadurch gekennzeichnet, daß die Auflagepunkte, welche als Anschlag (7), Auflage (8) und Befestigung (9) für die Konsole (1, 2, 3) dienen, durch ein Profil (12) ausgeführt sind, das in die im unteren Bereich der Wand (6) ausgebildete Ausnehmung (5) eingesetzt ist und als Stützelement für die Wand (6) selbst und die Kabel und Leitungen dienen kann.
